# FASCICULE DE BREVET EUROPEEN

(11) **EP 4 464 968 B1**
(45) Date de publication et mention de la délivrance du brevet: **10.06.2026**
(21) Numéro de dépôt: 24172861.7
(22) Date de dépôt: 26.04.2024
(51) Int. Cl.: F28D 9/00, F28D 21/00, F28F 9/00, B60H 1/00, B60H 1/32, B60K 11/04

(54) **SUPPORT POUR ÉCHANGEUR THERMIQUE ET ENSEMBLE DE RÉGULATION THERMIQUE FORMÉ D'AU MOINS UN ÉCHANGEUR THERMIQUE, UN SUPPORT, UN TUYAU DE CLIMATISATION ET UNE VALVE D'EXPANSION**
WÄRMETAUSCHERTRÄGER UND WÄRMEREGULIERUNGSANORDNUNG AUS MINDESTENS EINEM WÄRMETAUSCHER, EINEM TRÄGER, EINEM KLIMAROHR UND EINEM EXPANSIONSVENTIL
SUPPORT FOR A HEAT EXCHANGER AND THERMAL CONTROL ASSEMBLY FORMED BY AT LEAST ONE HEAT EXCHANGER, A SUPPORT, AN AIR-CONDITIONING PIPE AND AN EXPANSION VALVE

(30) Priorité: 15.05.2023 FR 2304787
(43) Date de publication de la demande: 20.11.2024
(73) Titulaire: Renault s.a.s, 92100 Boulogne Billancourt (FR)
(72) Inventeur: DAIN, Christophe, 78280 GUYANCOURT (FR); GHIRARDINI, Armand, 78280 GUYANCOURT (FR)

(56) Documents cités:
- WO-A1-2023/066821
- DE-A1- 102015 208 988
- FR-A1- 3 008 174
- FR-A1- 3 050 518
- GB-A- 356 911

## Description

La présente invention se rapporte aux domaines de la mécanique et des circuits de refroidissement intégrés dans un véhicule, et concerne plus particulièrement un support pour un échangeur thermique, destiné à être fixé dans le compartiment moteur d'un véhicule.

Les véhicules automobiles intègrent généralement un ou plusieurs circuits de refroidissement, notamment pour le fonctionnement d'un système de climatisation, et/ou le refroidissement de parties actives du véhicule lorsque celui-ci comporte un groupe motopropulseur électrique. Ces circuits de refroidissement comportent de nombreux tuyaux pour connecter les différents composants de ces circuits, parmi lesquels par exemple des échangeurs thermiques, des compresseurs ou des détendeurs. Certains tuyaux ou portions de tuyaux sont rigides et d'autres sont souples, ce qui permet de positionner et connecter facilement les composants entre eux, dans un compartiment moteur de véhicule. L'utilisation de portions souples de tuyaux nécessite néanmoins de les sertir à leurs extrémités, ce qui est coûteux. De plus comme ces portions ont un diamètre plus important que celui d'embouts rigides des composants auxquels elles sont connectées, et qu'elles ne présentent pas de parcours prédéfini dans l'espace, elles génèrent un encombrement plus important que si l'on utilise seulement des tuyaux rigides pour connecter les différents composants d'un circuit de refroidissement.

Il est donc envisagé de n'utiliser que des tuyaux rigides, par exemple en aluminium, pour connecter certains composants entre eux, par exemple un échangeur thermique et une valve d'expansion, faisant partie d'un circuit de climatisation. Cela permet de réduire les coûts et l'encombrement du circuit de climatisation.

Un tel circuit de climatisation pose cependant des difficultés à être monté dans le compartiment moteur d'un véhicule, du fait des dispersions de fabrication élevées, de l'ordre de 3mm pour une même référence de tuyau rigide. Lorsqu'un tel tuyau rigide est fixé sur un premier composant du circuit de climatisation, il peut donc être compliqué de le raccorder à un deuxième composant du circuit de climatisation sans contraindre l'extrémité du tuyau rigide à raccorder. Ces dispersions de fabrication peuvent ainsi générer des risques de fuite, car en forçant pour assembler le tuyau rigide à l'un des composants du circuit de climatisation, les joints peuvent être trop contraints ce qui les abîme.

WO-A-2023066821 décrit un support pour échangeur thermique constitué de quatre composants de support en plastique s'assemblant les uns aux autres par des systèmes de serrage utilisant des languettes s'insérant dans des glissières de manière non démontable, de sorte à s'adapter aux dimensions de n'importe quel type d'échangeur thermique.

La présente invention remédie au moins en partie aux inconvénients précités en fournissant un support pour un échangeur thermique, un ensemble de régulation thermique composé d'un tel support, d'un échangeur thermique monté dans le support, d'une vanne d'expansion et d'un tuyau de climatisation raccordé d'une part à l'échangeur thermique et d'autre part à la vanne d'expansion, et en fournissant un procédé de montage d'un tel ensemble, qui permettent de compenser lors de l'assemblage les dispersions de fabrication d'un tuyau de climatisation rigide.

A cette fin, l'invention propose un support pour un échangeur thermique dont une joue comporte au moins une connexion fluidique, le support comportant un socle, lequel comporte des moyens de fixation à un élément d'un véhicule et une surface d'appui apte à recevoir l'échangeur thermique selon une première direction, le socle étant apte à maintenir l'échangeur thermique selon une deuxième direction orthogonale à la première direction et parallèle à la surface d'appui,
le support étant caractérisé en ce que le socle est apte à permettre une translation de l'échangeur thermique selon une troisième direction orthogonale aux première et deuxième directions et en ce que le support comporte en outre une portion amovible, le socle et la portion amovible comportant des moyens d'assemblage l'un à l'autre et la portion amovible comportant des moyens de blocage en translation de l'échangeur thermique.

Par direction « orthogonale » ou « parallèle » dans cette demande, on entend bien sûr une direction « sensiblement orthogonale » ou respectivement « sensiblement parallèle » c'est-à-dire orthogonale à 15 degrés près ou respectivement parallèle à 15 degrés près. Grâce à l'invention, le support selon l'invention permet de poser l'échangeur thermique sur la surface d'appui selon la première direction, orthogonale à la surface d'appui, puis de laisser l'échangeur thermique être réglé en position dans la troisième direction, en étant maintenu en position dans la deuxième direction grâce au socle. Ainsi l'invention permet de prendre en compte la dispersion de fabrication d'un tuyau rigide de climatisation, destiné à être raccordé à la joue de l'échangeur thermique, en permettant un mouvement de l'échangeur thermique sur le support une fois celui-ci fixé dans le compartiment moteur d'un véhicule, par exemple sur un élément de châssis ou sur un moteur thermique. Le tuyau rigide est conformé de telle sorte que la plus grande dispersion de fabrication, notamment due à des portions coudées imposées au tuyau rigide, est selon une direction, lorsque le tuyau rigide est monté sur le véhicule, parallèle à la troisième direction.

La fixation de l'échangeur thermique sur le support est notamment assurée par l'assemblage de la portion amovible sur le socle, qui enserre l'échangeur thermique, et par les moyens de blocage de la portion amovible, qui viennent notamment bloquer la translation de l'échangeur thermique par rapport au socle dans la troisième direction. Les moyens de blocage permettent aussi d'empêcher tout autre mouvement de l'échangeur thermique sur le support, du fait par exemple de vibrations dans le compartiment moteur ou de jeux entre le support et l'échangeur thermique.

Afin de faciliter l'assemblage de l'échangeur thermique à plusieurs composants d'un circuit de climatisation auquel appartient l'échangeur thermique, la joue de l'échangeur thermique comporte de préférence toutes les connexions fluidiques de l'échangeur thermique, à savoir une connexion fluidique d'entrée de fluide réfrigérant, une connexion fluidique de sortie de fluide réfrigérant, une tubulure entrée et une tubulure de sortie de liquide caloporteur.

Il est à noter que le socle peut également prévoir des moyens de blocage de l'échangeur thermique, par exemple empêchant tout mouvement de celui-ci suivant la première ou la deuxième direction.

Le socle est apte à laisser libre en translation l'échangeur thermique sur le socle, selon une liaison glissière, ou bien le socle lui-même peut être amovible sur le support, en coulissant par exemple sur des rails. Dans ce cas, les moyens de blocage peuvent comprendre un pion de blocage du socle sur les rails.

Selon une caractéristique optionnelle de l'invention, la première direction et la deuxième direction sont parallèles à ladite joue, et la portion amovible et le socle une fois assemblés sont aptes former une ceinture autour de faces latérales de l'échangeur thermique, orthogonales à la joue. Cette ceinture a par exemple une fonction de frette, empêchant tout mouvement de l'échangeur thermique par rapport au support, en comprimant l'échangeur thermique sur au moins une de ses faces latérales. Cependant cette compression ne s'effectue par forcément sur toute la longueur de la ceinture, mais s'effectue par exemple en des points de compression prédéfinis. La portion amovible a une largeur, correspondant à sa dimension dans la troisième direction, plus petite que celle des faces latérales dans cette troisième direction. Ainsi, même à la suite d'une translation selon cette troisième direction de l'échangeur thermique sur le socle pour ajuster le raccordement du tuyau de climatisation à l'échangeur thermique, la portion de ceinture formée par la portion amovible reste au contact de l'échangeur thermique sur toute la largeur de la portion amovible.

Dans des modes de réalisation alternatifs, la joue de l'échangeur thermique est orthogonale à la deuxième ou à la troisième direction. Dans ce cas, la ceinture formée par le socle et la portion amovible recouvre une portion de la joue dépourvue de connexion fluidique.

Selon une caractéristique optionnelle de l'invention, le socle comporte une première paroi formant la surface d'appui, une deuxième paroi et une troisième paroi orthogonales à la surface d'appui, et les première, deuxième et troisième parois forment une partie inférieure de la ceinture. Le socle présente ainsi une forme de rail le long de la troisième direction, les deuxième et troisième parois orthogonales formant avec la surface d'appui, une liaison glissière avec l'échangeur thermique. Selon l'invention, le socle est ainsi caractérisé par l'absence de parois orthogonales à la troisième direction sur le socle.

Selon une caractéristique optionnelle de l'invention, la deuxième paroi ou la troisième paroi comportent une patte élastique apte à contraindre l'échangeur thermique dans la deuxième direction. Cette patte élastique permet de maintenir l'échangeur thermique fixe dans la deuxième direction malgré la présence de jeu entre les parois orthogonales du socle et l'échangeur thermique. La contrainte qu'elle exerce n'est cependant pas suffisamment importante pour empêcher un mouvement de l'échangeur thermique selon la troisième direction lors du raccordement du tuyau de climatisation à l'échangeur thermique par un opérateur.

Selon une caractéristique optionnelle de l'invention, la portion amovible, une fois assemblée avec le socle, forme un premier morceau de ceinture parallèle à la surface d'appui, un deuxième morceau de ceinture assemblé à la deuxième paroi par des premiers moyens de retenue des moyens d'assemblage, et un troisième morceau de ceinture assemblé à la troisième paroi par des deuxièmes moyens de retenue des moyens d'assemblage. Les moyens de retenue sont par exemple en partie sur le socle et en partie sur la portion amovible. Ils consistent par exemple en des systèmes de clip, comportant au moins un crochet, et un œillet dans lequel le crochet est apte à s'insérer par déformation élastique. Ils ont pour fonction de figer la position de la portion amovible par rapport au socle avec l'échangeur thermique enserré en position entre eux une fois le tuyau rigide de climatisation correctement fixé entre l'échangeur thermique et un autre composant, ici une valve d'expansion.

Selon une caractéristique optionnelle de l'invention, le premier morceau comporte une languette apte à contraindre l'échangeur thermique dans la première direction. Par exemple la languette fait saillie, dans la première direction, d'une paroi sensiblement plane définissant principalement le premier morceau. Elle comporte éventuellement des cannelures aptes à s'insérer entre des bords de plaques de l'échangeur thermique, ces bords étant disposés sur les faces latérales de l'échangeur thermique.

Selon une caractéristique optionnelle de l'invention, la portion amovible comporte des moyens de réception d'au moins une agrafe destinée à maintenir un élément d'un système de climatisation du véhicule. Le support sert donc d'interface de fixation pour un ou plusieurs éléments du système de climatisation, distincts de l'échangeur thermique, ces éléments étant par exemple un tuyau d'eau, des connecteurs de câblage de capteurs de température ou des câbles électriques.

Selon une caractéristique optionnelle de l'invention, le socle comporte un pied, le support comportant des plots antivibratoires montés sur le pied et coopérant avec les moyens de fixation du socle à l'élément du véhicule. Ces plots antivibratoires permettent de filtrer les vibrations arrivant à l'échangeur thermique.

Les moyens de fixation du socle comprennent par exemple des échancrures sur une embase du pied, les plots antivibratoires étant positionnés dans les échancrures de part et d'autre de l'embase, et fixés par des boulons dont les vis traversent les plots antivibratoires. Le support peut alternativement ou en outre comporter des plots antivibratoires montés sur des pattes reliées au socle, ces pattes étant disposées ailleurs que sur le pied du socle. Enfin le support n'est en variante pas équipé de plots antivibratoires, par exemple lorsqu'il est fixé sur un élément du véhicule déjà équipé de plots antivibratoires, tel que le moteur thermique du véhicule.

L'invention concerne aussi un ensemble de régulation thermique formé au moins d'un échangeur thermique, d'un support selon l'invention, d'un tuyau de climatisation rigide et d'une valve d'expansion, dans lequel l'échangeur thermique est monté sur le support et le tuyau de climatisation rigide est raccordé d'une part à la connexion fluidique de la joue de l'échangeur thermique, et d'autre part à la valve d'expansion.

Le support selon l'invention tel qu'il a été évoqué précédemment est particulièrement avantageux dans un ensemble de régulation thermique comportant un tuyau rigide de climatisation, c'est-à-dire un tuyau dont la forme est prédéfinie et reste la même avant et après assemblage. A l'inverse d'un tuyau flexible, souple, l'opérateur ne peut pas adapter la forme du tuyau de climatisation rigide pour gagner quelques millimètres dans un axe ou l'autre et permettre son assemblage qui tienne compte des dispersions de fabrication. Le support selon l'invention permet notamment, du fait de sa conception sous forme de ceinture réalisée en deux parties clipsables l'une sur l'autre, de donner du jeu sur la position de l'échangeur thermique avant que le tuyau de climatisation rigide ne soit définitivement fixé à chacune de ses extrémités.

Enfin l'invention concerne également un procédé de montage d'un ensemble de régulation thermique selon l'invention dans un compartiment moteur de véhicule, comportant :
- une étape de pré-positionnement, au cours de laquelle on fixe la valve d'expansion dans le compartiment moteur, on fixe le socle sur un élément du véhicule situé dans le compartiment moteur, et on positionne l'échangeur thermique dans le socle du support,
- une étape de raccordement au cours de laquelle on raccorde une des extrémités du tuyau de climatisation à la valve d'expansion, on raccorde l'autre des extrémités du tuyau de climatisation à la connexion fluidique de la joue de l'échangeur thermique, tout en ajustant la position de l'échangeur thermique selon la troisième direction dans le support, et
- une étape d'assemblage de la portion amovible du support au socle du support.

Là, encore, il est notable que le support selon l'invention permet de mettre en œuvre une étape de raccordement d'un tuyau rigide de climatisation avec un ajustement de la position de l'échangeur thermique avant l'assemblage des deux parties du support. Ceci peut notamment être opéré avec le raccordement d'une extrémité du tuyau de climatisation préalablement au positionnement de l'échangeur thermique dans le socle du support.

Le procédé de montage peut comporter au moins une étape supplémentaire de fixation d'autres éléments du système de climatisation sur le support selon l'invention, au moyen d'agrafes fixées sur le support selon l'invention. Ces éléments sont par exemple choisis parmi un tuyau d'eau, un connecteur de câblage de capteur de température, un câble électrique.

De manière générale, l'ensemble de régulation thermique selon l'invention et le procédé de montage selon l'invention comportent des avantages analogues à ceux du support selon l'invention.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] illustre en perspective un ensemble de régulation thermique formé d'au moins un échangeur thermique, un support dans lequel est monté l'échangeur thermique, une valve d'expansion et un tuyau de climatisation raccordé d'une part à l'échangeur thermique et d'autre part à la valve d'expansion, dans un mode de réalisation de l'invention,
[fig 2] est une vue éclatée en perspective de l'ensemble selon l'invention représenté en figure 1,
[fig 3] est une vue éclatée en perspective du support pour échangeur thermique selon l'invention représenté en figure 1, sur laquelle est notamment visible une portion inférieure et une portion supérieure, avec des angles de perspectives différents d'une portion à l'autre,
[fig 4] est une vue en perspective de l'échangeur thermique de la figure 1, monté dans le support selon l'invention de la figure 1, sur laquelle est visible une joue de l'échangeur thermique dépourvue de connexions fluidiques,
[fig 5] est une vue en coupe de l'échangeur thermique monté dans le support selon l'invention tel que visible en figure 4, mais dans laquelle une portion supérieure du support, amovible, n'est pas représentée,
[fig 6] est une vue en perspective de l'échangeur thermique de la figure 1, monté dans le support selon l'invention de la figure 1 et raccordé au tuyau de climatisation de la figure 1, dans laquelle le support sert par ailleurs à fixer des connecteurs de câblage de capteurs de température,
[fig 7] est une vue en perspective de l'échangeur thermique de la figure 1, monté dans le support selon l'invention de la figure 1 et raccordé au tuyau de climatisation de la figure 1, dans laquelle le support sert par ailleurs à fixer un câble électrique raccordé au moteur du véhicule,
[fig 8] est une vue en perspective de l'échangeur thermique de la figure 1, monté dans le support selon l'invention de la figure 1 et raccordé au tuyau de climatisation de la figure 1, dans laquelle le support sert par ailleurs à fixer un tuyau d'eau, et [fig 9] représente des étapes d'un procédé de montage selon l'invention de l'ensemble de régulation thermique selon l'invention, dans un mode de réalisation de l'invention.

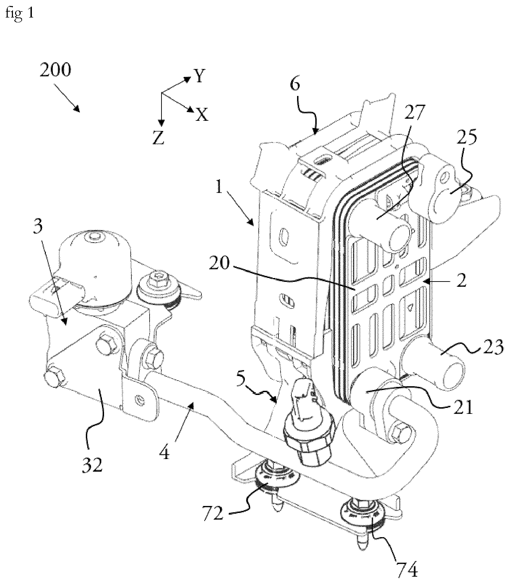

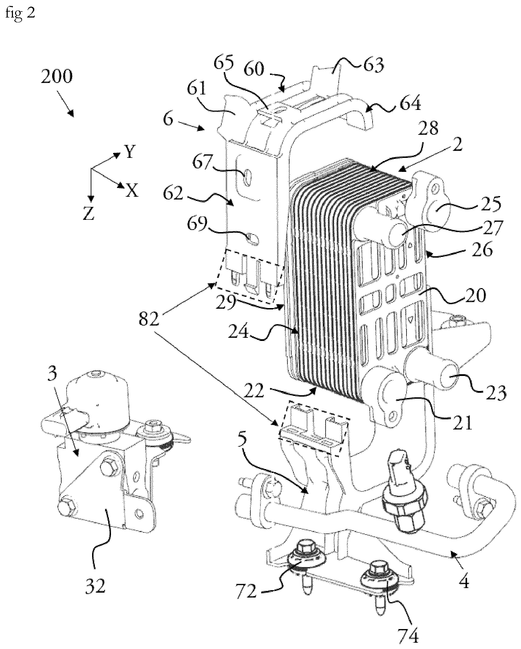

Tel que cela est notamment visible sur les figures 1 et 2, un ensemble de régulation thermique 200 selon l'invention, formé ici par un échangeur thermique 2, un support 1 pour échangeur thermique formant un aspect de l'invention, un tuyau de climatisation 4 et une valve d'expansion 3, est destiné à être monté dans un compartiment moteur d'un véhicule.

Notamment la valve d'expansion 3 est une électrovanne, dans ce mode de réalisation de l'invention, fixée sur une armature 32 en métal elle-même destinée à être fixée à un élément de châssis du véhicule par l'intermédiaire d'un plot anti-vibration.

Le support 1 pour échangeur thermique comporte un socle 5 et une portion amovible 6, configurée pour pouvoir dans un premier temps être à distance du socle et permettre ainsi le montage de l'échangeur thermique sur le support et pour pouvoir dans un deuxième temps être rapportée sur le socle 5 pour figer la position de l'échangeur thermique par rapport au support 1. Notamment, la portion amovible peut être fixé par encliquetage, c'est à dire par déformation élastique, et dans ce contexte être faite en matière synthétique moulée (plastique), ce qui lui confère l'élasticité nécessaire.

Le socle 5 est destiné à être fixé à un élément de châssis du véhicule par l'intermédiaire de plots antivibratoires 72, 74. En variante, le support 1 est fixé sur un élément du véhicule déjà fixé dans le compartiment moteur à l'aide de plots antivibratoires, et n'est donc pas lui-même équipé de plots antivibratoires.

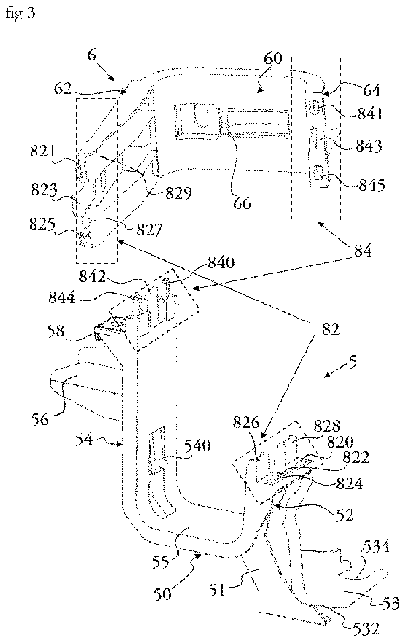

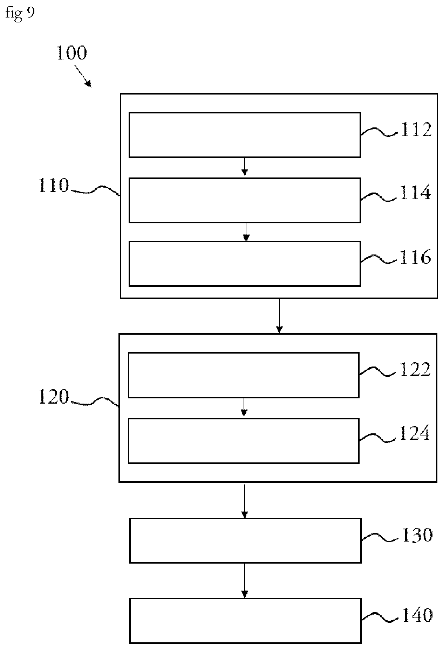

Le socle 5 comporte une surface d'appui 55 (référencée figure 3), qui correspond à une face interne d'une première paroi 50 (référencée figure 3) du socle 5, cette surface d'appui étant apte à recevoir un échangeur thermique 2 selon une première direction Z, orthogonale à la surface d'appui. Sans que cela soit limitatif de l'invention, lorsque le socle 5 est fixé dans le compartiment moteur, cette surface d'appui 55 est disposée sensiblement horizontalement, de sorte que la première direction Z est verticale. Dans ce contexte d'une première direction verticale, la surface d'appui 55 peut avantageusement être tournée vers le haut. Ainsi lorsqu'un opérateur commence à monter l'échangeur thermique 2 dans le support 1, et lorsqu'il pose l'échangeur thermique 2 sur cette surface d'appui 55 du support 1, l'échangeur thermique 2 reste immobile sur le socle 5 par l'effet de la gravité. Il y est maintenu, dans une deuxième direction Y orthogonale à la première direction Z, par deux parois en regard, à savoir une deuxième paroi 52 du socle 5 et une troisième paroi 54 du socle 5, orthogonales à la première paroi 50 du socle. Ainsi ces deuxième et troisième parois 52, 54 forment avec la surface d'appui 55 un rail en U formant une liaison glissière pour l'échangeur thermique 2, c'est-à-dire lui permettant de translater dans une troisième direction X orthogonale aux première et deuxième directions Z, Y. Cette translation permet d'ajuster la position de l'échangeur thermique par rapport au support au moment de raccorder le tuyau de climatisation 4 à l'échangeur thermique alors que ce tuyau de climatisation, non flexible, est déjà raccordé à la valve d'expansion 3, comme cela sera détaillé plus loin en relation avec la figure 9. Le tuyau de climatisation 4 est en effet rigide et présente une forme générale qui ne peut être modifiée au moment du raccordement de chacune de ses extrémités, et le mouvement relatif de l'échangeur thermique par rapport au support, tel qu'il est autorisé par l'invention, permet de faire abstraction des dispersions de fabrication et de positionnement à l'assemblage des composants présents dans le compartiment moteur.

L'échangeur thermique 2 est ici formé d'un empilement de plaques, sans que cela soit limitatif de l'invention, entre lesquelles sont amenés à circuler un fluide réfrigérant et un fluide caloporteur destinés à échanger des calories. L'empilement des plaques est notamment tel que les plaques sont superposées selon la troisième direction X, une joue étant disposée de part et d'autre de l'empilement des plaques.

L'échangeur thermique 2 comporte une connexion fluidique 21 d'entrée de fluide réfrigérant, une connexion fluidique 25 de sortie de fluide réfrigérant, une tubulure 23 de sortie de liquide caloporteur et une tubulure 27 d'entrée de liquide caloporteur. Dans l'exemple illustré, le tuyau de climatisation 4 précédemment évoqué est raccordé à la connexion fluidique 21 d'entrée de fluide réfrigérant, mais il convient de noter qu'il pourrait sans sortir du contexte de l'invention être raccordé à d'autres connexions fluidiques ou tubulures. Ces connexions et tubulures sont agencées sur une joue 20 de l'échangeur thermique, ici sur la même joue 20, ce qui permet de faciliter également la connexion d'autres tuyaux d'un système de climatisation du véhicule, aux connexions et tubulures de l'échangeur thermique 2.

Une fois l'échangeur thermique 2 fixé aux tuyaux du système de climatisation du véhicule, et au moins au tuyau de climatisation 4, ces tuyaux s'opposent à une translation de l'échangeur thermique 2 selon la troisième direction X. Cependant cette translation est définitivement bloquée par un verrouillage en translation selon la troisième direction X, opéré en assemblant la portion amovible 6 du support sur le socle 5.

La portion amovible 6 participe à former avec le socle 5 une ceinture autour de parois latérales 22, 24, 26, 28 de l'échangeur thermique 2, ces parois latérales comportant les bords des plaques de l'empilement de plaques de l'échangeur thermique 2 et étant donc orthogonales à la joue 20 de l'échangeur thermique 2. La ceinture ainsi formée par le support 1 dans son ensemble se comporte comme une frette, en amenant une contrainte sur les parois latérales 22, 24, 26, 28 selon les première et deuxième directions Z, Y, suffisamment forte pour empêcher tout mouvement de l'échangeur thermique 2 dans la troisième direction X. Du jeu existe en réalité entre la ceinture et l'échangeur thermique 2 sauf en des points spécifiques de compression comme expliqué plus loin en relation avec la figure 3.

Tel qu'évoqué, la portion amovible 6 forme un premier morceau 60 de cette ceinture, globalement parallèle à la première paroi 50 du socle 5, un deuxième morceau 62 de cette ceinture, perpendiculaire au premier morceau 60 et globalement parallèle à la deuxième paroi 52 du socle 5 et s'assemblant avec celle-ci par des premiers moyens de retenue 82, et un troisième morceau 64 de cette ceinture, également perpendiculaire au premier morceau 60 et globalement parallèle à la troisième paroi 54 du socle 5 et s'assemblant avec celle-ci par des deuxièmes moyens de retenue 84 (référencés figure 3). Les première, deuxième et troisième parois 50, 52, 54 du socle 5 forment les autres morceaux de cette ceinture.

La portion amovible 6 présente ainsi une forme de U, avec le premier morceau 60 qui forme une base disposée à l'opposé de la première paroi du socle 5 lorsque le support est assemblé.

La portion amovible 6 présente une largeur, mesurée selon la troisième direction X, strictement inférieure à la largeur de l'échangeur thermique 2, mesurée également selon la troisième direction X, et plus particulièrement ici de la joue 20 de l'échangeur thermique comportant les connexions fluidiques et tubulures jusqu'à sa joue opposée 29 dépourvue de telles connexions et tubulures. La largeur de la portion amovible 6 est par exemple inférieure à 85% de la largeur de l'échangeur thermique 2, et préférentiellement inférieure à 75% de la largeur de l'échangeur thermique 2.

Ce ratio de largeur de la portion amovible permet d'assurer que la portion amovible recouvre entièrement les faces latérales en regard desquelles elle doit se trouver, quel que soit l'ajustement en position de l'échangeur thermique par rapport à sa position théorique le long de la troisième direction X, lors de l'assemblage du tuyau rigide sur l'échangeur, cet ajustement pouvant notamment être de l'ordre de 1 à 10mm.

Comme particulièrement visible figure 2, la portion amovible 6 comporte de plus des moyens de réception d'agrafes permettant de maintenir d'autres éléments du système de climatisation, tels que des connecteurs ou des câbles. Notamment :
- le deuxième morceau 62 comporte des fenêtre 67, 69 agencées à distance de la paroi latérale 24 de l'échangeur thermique 2 et permettant de recevoir des pions de fixation d'agrafes, et
- le premier morceau 60 comporte une fenêtre 65 agencée à distance de la paroi latérale 28 de l'échangeur thermique 2 et permettant de recevoir un pion de fixation d'agrafe, et comporte également des oreilles 61, 63 aptes à recevoir chacune une agrafe configurée pour se pincer sur l'oreille correspondante. Les oreilles 61, 63 présentent chacune des butées de part et d'autre d'une zone de réception d'agrafe pour empêcher un glissement de l'agrafe le long de l'oreille.

Bien entendu, on comprend que les oreilles et fenêtres qui viennent d'être évoquées pourraient être agencées autrement sur le support et notamment autrement sur la portion amovible 6.

Les moyens de retenue de la portion amovible 6 sont maintenant décrits en relation avec la figure 3.

Les premiers moyens de retenue 82 comportent, sur le premier morceau 62 de la portion amovible 6, deux ergots 821, 825 terminant chacun un rail respectivement 829, 827 formé sur la surface interne du premier morceau 62. Entre les rails 829, 827, cette surface interne se termine par une patte élastique comportant une dent 823 à son extrémité.

Les premiers moyens de retenue comportent de manière complémentaire sur la deuxième paroi 52 du socle 5 :
- des orifices 820, 824 destinés à recevoir, selon la première direction Z, respectivement les ergots 821, 825 ; les ergots 821, 825 et les orifices 820, 824 constituent des moyens de guidage de la portion amovible 6 pour son clipsage sur le socle 5 ;
- un œillet 822 destiné à recevoir, selon la première direction Z, la patte élastique et plus particulièrement la dent 823 apte à se loger dans l'œillet par déformation élastique de celle-ci ou de l'œillet 822, la dent 823 ayant pour fonction de verrouiller la portion amovible 6 par rapport à la deuxième paroi 52 en formant une butée sur un bord délimitant l'œillet une fois reprise la forme d'origine de la patte élastique ou de l'œillet, et
- des créneaux 826, 828 destinés à s'insérer, selon la première direction Z, dans les rails respectifs 827, 829 de la portion amovible, ces créneaux constituant également des moyens de guidage de la portion amovible 6 pour son clipsage sur le socle 5.

Inversement, les deuxièmes moyens de retenue 84 comportent, sur la troisième paroi 54 du socle 5, deux ergots 840, 844 aptes à s'insérer chacun dans un orifice respectivement 841, 845 agencé dans le troisième morceau 64 de la portion amovible 6, ces orifices 841, 845 faisant partie également des deuxièmes moyens de retenue 84. Cette insertion s'effectue parallèlement à la première direction Z.

Les deuxièmes moyens de retenue 84 comportent également sur la troisième paroi 54, une patte élastique se terminant par une dent 842 apte à s'insérer dans un œillet 843 agencé dans le troisième morceau 64 entre les orifices 841, 845, et faisant aussi partie des deuxièmes moyens de retenue 84. Ainsi les ergots 840, 844 du socle 5 et les orifices 841, 845 du troisième morceau 64 constituent des moyens de guidage de la portion amovible 6 pour son clipsage sur le socle 5, et la dent 842 ainsi que l'œillet 843 constituent des moyens de verrouillage par déformation élastique de la portion amovible 6 sur le socle 5.

Le fait que les moyens de retenue comportent des dents respectivement 842, 823 solidaires l'une du socle 5 et l'autre du deuxième morceau 62 permet un meilleur verrouillage de la portion amovible 6 sur le socle 5.

D'autre part, la troisième paroi 54 du socle 5 comporte une languette 540 apte à contraindre l'échangeur thermique 2 dans la deuxième direction Y. Cette languette fait saillie de la troisième paroi 54 du socle vers l'échangeur thermique, et comporte un doigt formant un bossage vers l'intérieur du socle 5 pour assurer un contact linéaire avec l'échangeur thermique 2.

De façon similaire, le premier morceau 60 de la portion amovible 6 comporte une languette 66 apte à contraindre l'échangeur thermique 2 dans la première direction Z, la languette 66 faisant saillie vers l'échangeur thermique. Tel que cela est visible sur la figure 3, et conformément à ce qui a été évoqué pour la languette formant saillie du socle, la languette 66 comporte un doigt permettant d'assurer un contact linéaire entre la languette 66 et l'échangeur thermique 2 et d'assurer ainsi un effort de pression adéquat sur l'échangeur thermique selon la première direction Z.

Les languettes 540, 66 sont dimensionnées pour d'une part empêcher les mouvements de l'échangeur thermique 2 selon la première et la troisième direction tel que cela vient d'être évoqué, en s'assurant que l'échangeur thermique 2 soit plaqué sur la paroi du support opposée à celle sur laquelle est formée ladite languette, et pour d'autre part assurer une contrainte suffisamment forte sur l'échangeur thermique 2 pour empêcher tout mouvement de l'échangeur thermique 2 selon la troisième direction X. De la sorte, les languettes 540, 66 sont des points de compression de la ceinture sur l'échangeur thermique 2.

En variante, au moins une des languettes 540, 66 comporte des cannelures, s'étendant selon une direction perpendiculaire à la troisième direction X et aptes à s'insérer chacune entre deux bords de plaques de l'échangeur thermique 2, assurant ainsi un verrouillage de tout mouvement de l'échangeur thermique 2 selon la troisième direction X, sans nécessiter de contrainte forte de la languette 66 dans la première direction Z.

Par ailleurs, le socle 5 comporte un pied 51 s'étendant dans la première direction Z vers une embase 53 apte à être fixée à un élément du compartiment moteur. L'embase 53 se présente sous la forme d'une platine comportant des échancrures 532, 534 aptes à recevoir chacune une vis. Lors de la fixation du socle 5 à l'élément du compartiment moteur, les plots antivibratoires 72, 74 sont respectivement positionnés de part et d'autre de la platine au niveau des échancrures 532, 534, puis des vis traversant les plots et les échancrures sont placées dans des orifices de l'élément du compartiment moteur prévus à cet effet, et maintenues en position par des écrous.

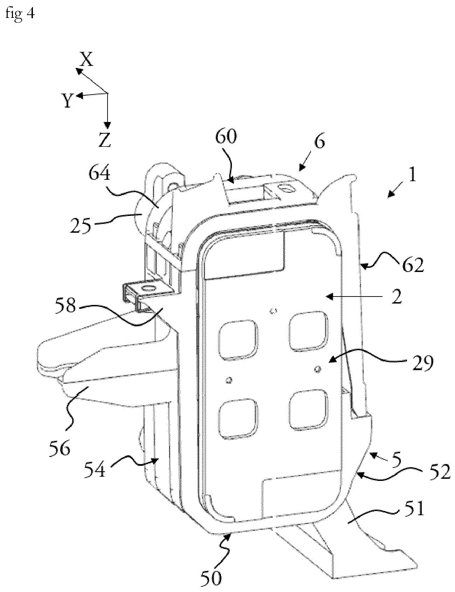

Comme visible plus particulièrement figure 4, la troisième paroi 54 du socle 5 comporte également une platine 56 supportée par des équerres, la platine 56 s'étendant orthogonalement de la troisième paroi 54 et comportant une échancrure pour la fixation de la platine 56 à un autre élément du compartiment moteur, par exemple un compresseur, en utilisant également un plot antivibratoire. Bien entendu l'utilisation de ces plots antivibratoires est facultative.

Une autre platine 58, plus petite et supportée par des équerres, s'étend orthogonalement de la troisième paroi 54 et comporte un orifice destiné à recevoir une vis pour la fixation par exemple de moyens de maintien d'un tuyau.

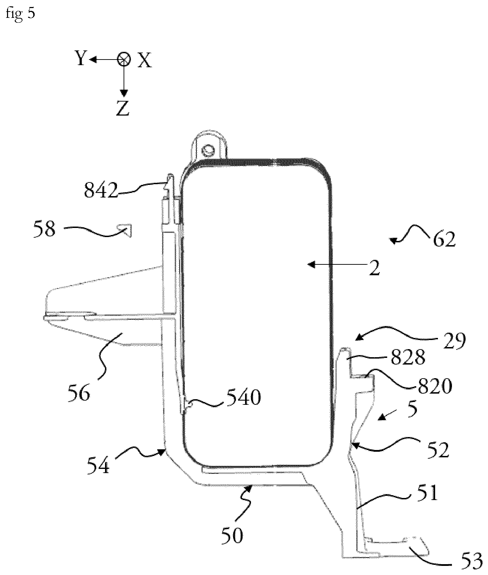

La figure 5 montre plus précisément en coupe la structure du socle 5. Comme expliqué précédemment, l'élasticité de la portion amovible 6, et notamment des moyens de retenue 82, 84 et de la languette 66 faisant partie de la portion amovible 6, est conférée par la matière synthétique moulée utilisée pour former cette portion amovible 6.

Concernant le socle 5, celui-ci est préférentiellement réalisé en métal, notamment en acier, et l'élasticité de la languette 540 et de la dent 842 est réalisée par des portions du socle 5 qui sont moins épaisses que le reste du socle 5, plus épais et donc plus rigide. Ainsi il est visible sur la figure 5, que la troisième paroi 54 intègre une portion de matière plus fine que le reste de la troisième paroi 54, cette portion de matière plus fine formant les platines 56, 58 ainsi que la languette 540 et la dent 842 situées à l'extrémité l'une de l'autre sur la troisième paroi 54, dans la première direction Z.

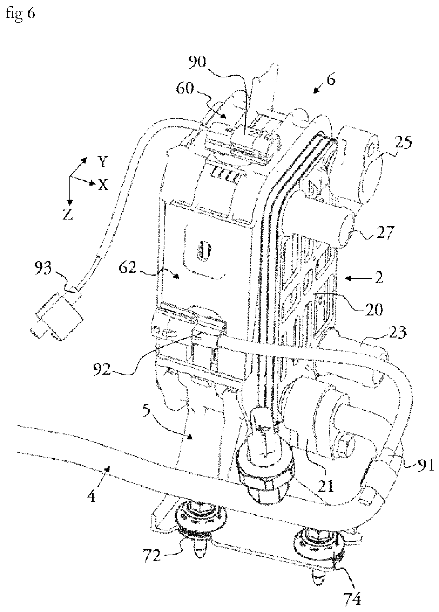

La figure 6 illustre maintenant l'utilisation des fenêtre 65, 69 sur la portion amovible 6, pour la fixation respectivement d'un connecteur 90 de câblage d'un capteur de température pourvu d'une sonde 93, et d'un connecteur 92 d'un capteur de température pourvu d'une sonde 91, disposée contre le tuyau de climatisation 4.

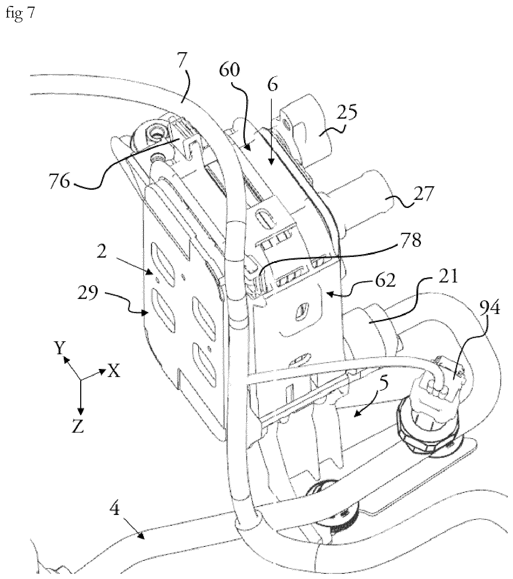

La figure 7 illustre de manière similaire, l'utilisation des fenêtres 61, 63 sur la portion amovible 6, pour la fixation d'une agrafe respective 78, 76, les agrafes 78, 76 permettant le maintien d'un câble électrique 7, dont une dérivation comporte ici un connecteur électrique 94.

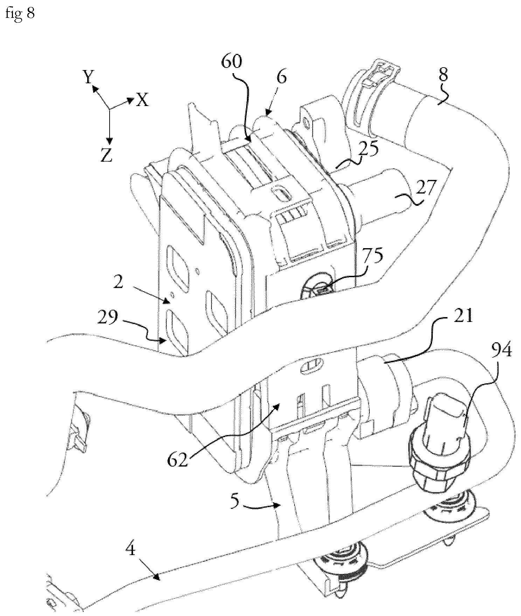

La figure 8 illustre d'autre part l'utilisation de la fenêtre 67 sur la portion amovible 6, pour la fixation d'une agrafe 75 apte à recevoir un collier de serrage pour la fixation d'un tuyau d'eau 8.

La figure 9 détaille maintenant un procédé de montage 100 de l'ensemble de régulation thermique 200 selon l'invention, mis en œuvre par un opérateur.

Lors d'une première étape 110, l'opérateur pré-positionne la valve d'expansion 3 et le socle 5 dans le compartiment moteur, et insère l'échangeur thermique 2 dans le socle 5.

Par exemple lors d'une première sous-étape 112 de la première étape 110, l'opérateur fixe l'armature 32 sur un élément de châssis du véhicule, dans le compartiment moteur. La valve 3 est fixée dans cette première sous-étape, dans l'armature 32 et donc à l'élément de châssis, à une position prédéfinie dans le compartiment moteur.

Lors d'une deuxième sous-étape 114 de la première étape 110, l'opérateur fixe le socle 5 à l'élément de châssis du véhicule ou à un autre élément dans le compartiment moteur, en utilisant les plots antivibratoires 72, 74 et les boulons associés.

Enfin lors d'une troisième sous-étape 116 de la première étape 110, l'opérateur pré-positionne l'échangeur thermique 2 sur la surface d'appui 55 du socle 5.

Bien sûr l'ordre des sous-étapes 112 à 116 peut être modifié.

Lors d'une deuxième étape 120 du procédé de montage 100, l'opérateur raccorde le tuyau de climatisation 4 à la valve d'expansion 3 et à l'échangeur thermique 2 en ajustant la position de celui-ci selon la troisième direction X.

Par exemple lors d'une première sous-étape 122 de la deuxième étape 120, l'opérateur connecte de manière étanche une extrémité du tuyau de climatisation 4 à la valve d'expansion 3.

Lors d'une deuxième sous-étape 124 de la deuxième étape 120, l'opérateur déplace l'échangeur thermique 2 par rapport au socle 5 du support, dans la troisième direction X, de sorte à amener la connexion fluidique d'entrée 21 de l'échangeur thermique 2 contre l'autre extrémité du tuyau de climatisation et pouvoir connecter de manière étanche cette autre extrémité à la connexion fluidique d'entrée 21, sans avoir à contraindre le tuyau de climatisation.

Bien sûr l'ordre des sous-étapes 122, 124 peut être inversé.

Par ailleurs, il convient de comprendre que le découpage des première et deuxième étapes a ici été effectué pour faciliter la compréhension du lecteur, mais sans sortir du contexte de l'invention, on pourra prévoir que la première sous-étape 122 de la deuxième étape 120 pourrait avoir lieu au cours de la première étape 120, une fois la valve d'expansion rapportée sur le véhicule.

Lors d'une troisième étape 130 du procédé de montage 100, la portion amovible 6 est assemblée au socle 5 grâce aux premiers et deuxièmes moyens de retenue, qui sont des systèmes de clip. De ce fait il est à noter que la portion amovible 6 est démontable, est à distance du socle lors du montage de l'échangeur thermique et vise à bloquer la position de l'échangeur thermique une fois le raccordement du tuyau rigide de climatisation effectué.

Enfin une dernière étape 140 du procédé de montage 100 est la fixation d'autres éléments du système de climatisation sur le support 1, grâce aux moyens de réception d'agrafes que constituent les fenêtres 65, 67, 69 et les oreilles 61, 63, et grâce à l'orifice disposé dans la platine 58.

Bien sûr, l'invention n'est pas limitée aux exemples qui viennent d'être décrits et de nombreux aménagements peuvent être apportés à ces exemples sans sortir du cadre de l'invention tel que défini par les revendications annexées.

## Revendications

1. Support (1) pour un échangeur thermique (2) dont une joue (20) comporte au moins une connexion fluidique (21, 25), le support (1) comportant un socle (5), lequel comporte des moyens de fixation (72, 74) à un élément d'un véhicule et une surface d'appui (55) apte à recevoir l'échangeur thermique (2) selon une première direction (Z), le socle (5) étant apte à maintenir l'échangeur thermique (2) selon une deuxième direction (Y) orthogonale à la première direction (Z) et parallèle à la surface d'appui (55), le socle (5) étant apte à permettre une translation de l'échangeur thermique (2) selon une troisième direction (X) orthogonale aux première et deuxième directions (Z, Y), le socle (5) étant dépourvu de paroi orthogonale à la troisième direction (X), et en ce que le support (1) comporte en outre une portion amovible (6), le socle (5) et la portion amovible (6) comportant des moyens d'assemblage (82, 84) l'un à l'autre et la portion amovible (6) comportant des moyens de blocage (66) en translation de l'échangeur thermique (2).

2. Support (1) pour un échangeur thermique (2) selon la revendication 1, dans lequel la première direction (Z) et la deuxième direction (Y) sont parallèles à ladite joue (20), et dans lequel la portion amovible (6) et le socle (5) une fois assemblés sont aptes former une ceinture autour de faces latérales (22, 24, 26, 28) de l'échangeur thermique (2), orthogonales à la joue (20).

3. Support (1) pour un échangeur thermique (2) selon la revendication 2, dans lequel le socle (5) comporte une première paroi (50) formant la surface d'appui (55), une deuxième paroi (52) et une troisième paroi (54) orthogonales à la surface d'appui (55), et dans lequel les première, deuxième et troisième parois (50, 52, 54) forment une partie inférieure de la ceinture.

4. Support (1) pour un échangeur thermique (2) selon la revendication 3, dans lequel la deuxième paroi (52) ou la troisième paroi (54) comportent une patte élastique (540) apte à contraindre l'échangeur thermique (2) dans la deuxième direction (Y).

5. Support (1) pour un échangeur thermique (2) selon la revendication 3 ou 4, dans lequel la portion amovible (6) une fois assemblée avec le socle (5), forme un premier morceau (60) de ceinture parallèle à la surface d'appui (55), un deuxième morceau de ceinture (62) assemblé à la deuxième paroi (52) par des premiers moyens de retenue (82) des moyens d'assemblage, et un troisième morceau de ceinture (64) assemblé à la troisième paroi (54) par des deuxièmes moyens de retenue (84) des moyens d'assemblage.

6. Support (1) pour un échangeur thermique (2) selon la revendication 5, dans lequel le premier morceau (60) comporte une languette (66) apte à contraindre l'échangeur thermique (2) dans la première direction (Z).

7. Support (1) pour un échangeur thermique (2) selon l'une quelconque des revendications 1 à 6, dans lequel la portion amovible (6) comporte des moyens de réception (61, 63, 65, 67, 69) d'au moins une agrafe (76, 78, 75) destinée à maintenir un élément (90, 92, 7, 8) d'un système de climatisation du véhicule.

8. Support (1) pour un échangeur thermique (2) selon l'une quelconque des revendications 1 à 7, dans lequel le socle (5) comporte un pied (51), le support (1) comportant des plots antivibratoires (72, 74) montés sur le pied (51) et coopérant avec les moyens de fixation (532, 534) du socle (5) à l'élément du véhicule.

9. Ensemble de régulation thermique (200) formé d'au moins un échangeur thermique (2), un support (1) selon l'une quelconque des revendications précédentes, un tuyau de climatisation (4) et une valve d'expansion (3), dans lequel l'échangeur thermique (2) est monté sur le support (1) et le tuyau de climatisation (4) est raccordé d'une part à la connexion fluidique (21) de la joue (20) de l'échangeur thermique (2), et d'autre part à la valve d'expansion (3).

10. Procédé de montage (100) d'un ensemble de régulation thermique (200) selon la revendication précédente dans un compartiment moteur de véhicule, comportant :
- une étape de pré-positionnement (110), au cours de laquelle on fixe (112) la valve d'expansion (3) dans le compartiment moteur, on fixe (114) le socle (5) sur un élément du véhicule situé dans le compartiment moteur, et on positionne (116) l'échangeur thermique (2) dans le socle (5) du support (1),
- une étape de raccordement (120) au cours de laquelle on raccorde (122) une des extrémités du tuyau de climatisation (4) à la valve d'expansion (3), on raccorde (124) l'autre des extrémités du tuyau de climatisation (4) à la connexion fluidique (21) de la joue (20) de l'échangeur thermique (2), tout en ajustant la position de l'échangeur thermique (2) selon la troisième direction (X) dans le support (1), et
- une étape d'assemblage (130) de la portion amovible (6) du support (1) au socle (5) du support (1).

## Patentansprüche

1. Träger (1) für einen Wärmetauscher (2), dessen eine Seitenwand (20) mindestens einen Fluidanschluss (21, 25) aufweist, wobei der Träger (1) einen Sockel (5) aufweist, der Mittel zum Befestigen (72, 74) an einem Bauteil eines Fahrzeugs und eine Auflagefläche (55) aufweist, die dazu geeignet ist, den Wärmetauscher (2) in einer ersten Richtung (Z) aufzunehmen, wobei der Sockel (5) den Wärmetauscher (2) in einer zweiten Richtung (Y) halten kann, die orthogonal zur ersten Richtung (Z) und parallel zur Auflagefläche (55) verläuft,
wobei der Sockel (5) geeignet ist, eine Verschiebung des Wärmetauschers (2) in einer dritten Richtung (X) zu ermöglichen, die orthogonal zur ersten und zweiten Richtung (Z, Y) verläuft, wobei der Sockel (5) keine Wand aufweist, die orthogonal zur dritten Richtung (X) verläuft, und der Träger (1) ferner einen abnehmbaren Abschnitt (6) aufweist, wobei der Sockel (5) und der abnehmbare Abschnitt (6) Mittel zum Montieren (82, 84) aneinander aufweisen und der abnehmbare Abschnitt (6) Mittel zum Arretieren (66) der Verschiebung des Wärmetauschers (2) aufweist.

2. Träger (1) für einen Wärmetauscher (2) nach Anspruch 1, wobei die erste Richtung (Z) und die zweite Richtung (Y) parallel zu der Seitenwand (20) verlaufen und wobei der abnehmbare Abschnitt (6) und der Sockel (5) im montierten Zustand einen Gürtel um die Seitenflächen (22, 24, 26, 28) des Wärmetauschers (2) bilden können, die senkrecht zur Seitenwand (20) stehen.

3. Träger (1) für einen Wärmetauscher (2) nach Anspruch 2, wobei der Sockel (5) eine erste Wand (50), die die Auflagefläche (55) bildet, eine zweite Wand (52) und eine dritte Wand (54) aufweist, die senkrecht zur Auflagefläche (55) stehen, und wobei die erste, zweite und dritte Wand (50, 52, 54) einen unteren Teil des Gürtels bilden.

4. Träger (1) für einen Wärmetauscher (2) nach Anspruch 3, wobei die zweite Wand (52) oder die dritte Wand (54) eine elastische Lasche (540) aufweist, die den Wärmetauscher (2) in der zweiten Richtung (Y) festhalten kann.

5. Träger (1) für einen Wärmetauscher (2) nach Anspruch 3 oder 4, wobei der abnehmbare Abschnitt (6) im am Sockel (5) montierten Zustand ein erstes Gürtelstück (60) bildet, das parallel zur Auflagefläche (55) verläuft, ein zweites Gürtelstück (62), das über erste Mittel zum Halten (82) der Mittel zum Montieren an die zweite Wand (52) montiert ist, und ein drittes Gürtelstück (64), das über zweite Mittel zum Halten (84) der Mittel zum Montieren an die dritte Wand (54) montiert ist.

6. Träger (1) für einen Wärmetauscher (2) nach Anspruch 5, wobei das erste Stück (60) eine Zunge (66) aufweist, die den Wärmetauscher (2) in der ersten Richtung (Z) festhalten kann.

7. Träger (1) für einen Wärmetauscher (2) nach einem der Ansprüche 1 bis 6, wobei der abnehmbare Abschnitt (6) Mittel zum Aufnehmen (61, 63, 65, 67, 69) mindestens einer Klammer (76, 78, 75) aufweist, die dazu bestimmt ist, ein Bauteil (90, 92, 7, 8) einer Klimaanlage des Fahrzeugs zu halten.

8. Träger (1) für einen Wärmetauscher (2) nach einem der Ansprüche 1 bis 7, wobei der Sockel (5) einen Fuß (51) aufweist, wobei der Träger (1) Schwingungsdämpfer (72, 74) aufweist, die am Fuß (51) angebracht sind und mit den Mitteln zum Befestigen (532, 534) des Sockels (5) am Bauteil des Fahrzeugs zusammenwirken.

9. Temperaturregelungsbaugruppe (200), bestehend aus mindestens einem Wärmetauscher (2), einem Träger (1) nach einem der vorhergehenden Ansprüche, einem Klimarohr (4) und einem Expansionsventil (3), wobei der Wärmetauscher (2) an dem Träger (1) angebracht ist und das Klimarohr (4) einerseits an den Fluidanschluss (21) der Seitenwand (20) des Wärmetauschers (2) und andererseits an das Expansionsventil (3) angeschlossen ist.

10. Verfahren (100) zum Einbau einer Temperaturregelungsbaugruppe (200) nach dem vorhergehenden Anspruch in einen Fahrzeugmotorraum, das Folgendes aufweist:
- einen Schritt zum Vorpositionieren (110), während dem das Expansionsventil (3) im Motorraum befestigt wird (112), der Sockel (5) an einem im Motorraum befindlichen Bauteil des Fahrzeugs befestigt wird (114) und der Wärmetauscher (2) im Sockel (5) des Trägers (1) positioniert wird (116),
- einen Schritt zum Verbinden (120), in dem eines der Enden des Klimarohrs (4) mit dem Expansionsventil (3) verbunden wird (122), das andere Ende des Klimarohrs (4) an den Fluidanschluss (21) der Seitenwand (20) des Wärmetauschers (2) angeschlossen wird (124), während die Position des Wärmetauschers (2) im Träger (1) in der dritten Richtung (X) justiert wird, und
- einen Schritt zum Montieren (130) des abnehmbaren Abschnitts (6) des Trägers (1) an den Sockel (5) des Trägers (1).

## Claims

1. Support (1) for a heat exchanger (2) of which one end panel (20) has at least one fluidic connection (21, 25), the support (1) having a plinth (5), which has means (72, 74) for fastening to an element of a vehicle and a bearing surface (55) that is able to receive the heat exchanger (2) in a first direction (Z), the plinth (5) being able to hold the heat exchanger (2) in a second direction (Y) orthogonal to the first direction (Z) and parallel to the bearing surface (55),
the plinth (5) being able to allow a translation of the heat exchanger (2) in a third direction (X) orthogonal to the first and second directions (Z, Y), the plinth (5) having no wall orthogonal to the third direction (X), and in that the support (1) also has a removable portion (6), the plinth (5) and the removable portion (6) having means (82, 84) for assembling one with the other and the removable portion (6) having means (66) for blocking the heat exchanger (2) in translation.

2. Support (1) for a heat exchanger (2) according to Claim 1, wherein the first direction (Z) and the second direction (Y) are parallel to said end panel (20), and wherein the removable portion (6) and the plinth (5), once assembled, are able to form a belt around lateral faces (22, 24, 26, 28) of the heat exchanger (2), which are orthogonal to the end panel (20).

3. Support (1) for a heat exchanger (2) according to Claim 2, wherein the plinth (5) has a first wall (50) forming the bearing surface (55), a second wall (52) and a third wall (54) that are orthogonal to the bearing surface (55), and wherein the first, second and third walls (50, 52, 54) form a lower part of the belt.

4. Support (1) for a heat exchanger (2) according to Claim 3, wherein the second wall (52) or the third wall (54) has an elastic tab (540) that is able to stress the heat exchanger (2) in the second direction (Y).

5. Support (1) for a heat exchanger (2) according to Claim 3 or 4, wherein the removable portion (6), once assembled with the plinth (5), forms a first belt piece (60) parallel to the bearing surface (55), a second belt piece (62) assembled with the second wall (52) by first retaining means (82) of the assembly means, and a third belt piece (64) assembled with the third wall (54) by second retaining means (84) of the assembly means.

6. Support (1) for a heat exchanger (2) according to Claim 5, wherein the first piece (60) has a tongue (66) that is able to stress the heat exchanger (2) in the first direction (Z).

7. Support (1) for a heat exchanger (2) according to any one of Claims 1 to 6, wherein the removable portion (6) has means (61, 63, 65, 67, 69) for receiving at least one clip (76, 78, 75) intended to hold an element (90, 92, 7, 8) of an air-conditioning system of the vehicle.

8. Support (1) for a heat exchanger (2) according to any one of Claims 1 to 7, wherein the plinth (5) has a foot (51), the support (1) having anti-vibration pads (72, 74) mounted on the foot (51) and cooperating with the means (532, 534) for fastening the plinth (5) to the element of the vehicle.

9. Thermal regulation assembly (200) formed of at least a heat exchanger (2), a support (1) according to any one of the preceding claims, an air-conditioning pipe (4) and an expansion valve (3), wherein the heat exchanger (2) is mounted on the support (1) and the air-conditioning pipe (4) is connected on the one hand to the fluidic connection (21) of the end panel (20) of the heat exchanger (2) and on the other hand to the expansion valve (3).

10. Method for mounting (100) a thermal regulation assembly (200) according to the preceding claim in a vehicle engine compartment, involving:
- a pre-positioning step (110), during which the expansion valve (3) is fastened (112) in the engine compartment, the plinth (5) is fastened (114) to an element of the vehicle situated in the engine compartment, and the heat exchanger (2) is positioned (116) in the plinth (5) of the support (1),
- a connection step (120) during which one of the ends of the air-conditioning pipe (4) is connected (122) to the expansion valve (3), the other of the ends of the air-conditioning pipe (4) is connected (124) to the fluidic connection (21) of the end panel (20) of the heat exchanger (2), while at the same time adjusting the position of the heat exchanger (2) in the third direction (X) in the support (1), and
- a step (130) of assembling the removable portion (6) of the support (1) with the plinth (5) of the support (1).
